Europäisches Patentamt

European Patent Office

Office européen des brevets

(19)

(11) Numéro de publication: **0 105 820**
**A2**

(12) ## DEMANDE DE BREVET EUROPEEN

(21) Numéro de dépôt: 83450023.3

(22) Date de dépôt: 27.09.83

(51) Int. Cl.³: **B 41 J 3/32**
**G 09 B 21/02**

(30) Priorité: 27.09.82 FR 8216341

(43) Date de publication de la demande:
18.04.84 Bulletin 84/16

(84) Etats contractants désignés:
AT BE CH DE GB IT LI LU NL SE

(71) Demandeur: Berguignat, Jean-Marie
La Tuilerie - Madaillan
F-47360 Prayssas(FR)

(72) Inventeur: Berguignat, Jean-Marie
La Tuilerie - Madaillan
F-47360 Prayssas(FR)

(74) Mandataire: Trolliet, Jean-Claude
Cabinet BURDIPAT 20, cours du Chapeau Rouge
F-33000 Bordeaux(FR)

(54) Dispositif d'impression des caractères Braille sur un support.

(57) L'invention concerne un dispositif permettant l'impression de tous les caractères Braille par points saillants au moyen de trois touches (34) et trois doigts d'une même main sur un support tel que papier maintenu sur une tablette (1) par un cadre rigide (6) articulé permettant l'introduction du support et son maintien sur une épaisseur de matière souple (8) telle que mousse fixée sur le plateau de la tablette (1) sur laquelle sont fixés et répartis des picots saillants (9) alignés horizontalement par groupes de trois lignes et groupes de deux rangées articulées correspondant à la surface déterminée du support à impressionner, les picots (9) traversent l'épaisseur de matière souple (8) jusqu'à affleurer sa partie supérieure sur laquelle sont aménagées de façon décalée des emplacements des picots, des cuvettes (12) permettant le logement des caractères imprimés du recto afin d'impressionner le verso, impression ayant lieu au moyen d'une imprimante (20) se déplaçant sur une règle mobile (16) maintenue sur les montants (14 et 14A) du cadre (6). L'imprimante (20) est constituée de trois touches (34) reliées chacune à une traverse mobile (28) prolongées par un marteau (37) destiné à l'aplomb de trois positions distinctes de chacune des traverses (28), à appuyer sur une plateforme correspondant à un point de l'écriture Braille, en une position extrême de la traverse (28) le marteau (37) permettant l'impression des deux points simultanés correspondant aux deux plateformes des positions précédentes.

Fig.1

Croydon Printing Company Ltd

EP 0 105 820 A2

1

## Dispositif d'impression des caractères Braille sur un support

La présente invention concerne un dispositif d'impression de caractères Braille par points saillants au moyen d'une imprimante à touches sur un support tel que papier disposé et maintenu sur une tablette.

On connaît pour écrire selon la méthode Braille, l'impression manuelle des caractères à l'aide d'un poinçon et d'une tablette sur laquelle est maintenu le support à impressionner, la tablette est dotée pour chaque ligne de trois saignées horizontales permettant au moyen du poinçon de réaliser les dépressions selon la disposition conventionnelle de chaque caractère sur deux rangées verticales, l'emplacement des caractères sur les trois lignes horizontales et les deux rangées verticales étant défini par une réglette. Ce dispositif présente certains inconvénients, il nécessite de pratiquer les dépressions correspondant aux caractères en commençant la ligne par la droite du support en allant vers la gauche, d'autre part la correction est malaisée étant donné qu'il est nécessaire de soulever le support pouvant engendrer son décalage.

On connaît aussi des machines permettant l'impression des caractères Braille comportant sept touches, six desdites touches correspondant à un point défini, la septième étant destinée à l'espacement entre les caractères, ce genre de machine nécessite l'emploi des deux mains pour impressionner la majorité des caractères, ce qui n'est pas toujours aisé pour les gens privés de la vue, d'autre part les corrections sont délicates et pratiquemment impossibles étant donné que le support à impressionner est enroulé autour d'un cylindre comme les machines à écrire classiques, de ce fait il est impossible d'impressionner le support sur ses deux faces.

L'invention a pour but de pallier aux inconvénients précédemment exposés.

L'invention a pour objet un dispositif permettant l'impression de tous les caractères Braille par points saillants au moyen de trois touches et trois doigts d'une même main sur un support tel que papier, caractérisé en ce qu'il comporte une tablette constituée par un plateau rigide sur lequel sont disposés des picots répartis sur la surface correspondante à la surface du support à impressionner, les picots sont alignés horizontalement par groupes de trois lignes à écartement constant et par groupes de deux rangées verticales afin de correspondre à la ligne d'écriture dite Braille et notamment à la façon conventionnelle d'écriture des caractères, sur le plateau rigide est maintenue une épaisseur de matière souple telle que mousse que les picots traversent jusqu'en sa partie supérieure, entre l'emplacement des picots et suivant un décalage défini des cuvettes sont aménagées afin de correspondre aux impressions en saillie du recto du support imprimé pour permettre l'impression du verso dudit support tout en évitant l'effacement du recto. Le support à impressionner est maintenu sur la tablette par pincement sur toute sa périphérie au moyen d'un cadre rigide articulé en une extrémité, son autre extrémité recevant le dispositif de verrouillage sur le chassis de la tablette, dans l'épaisseur des montants latéraux du cadre une saignée est aménagée afin de constituer une glissière maintenant et guidant une règle mobile transversalement sur laquelle coulisse un bâti d'imprimante dotée de trois touches mobiles indépendamment dans le sens de déplacement de la règle selon trois positions, l'enfoncement de chaque touche à l'aplomb de deux desdites positions permet l'impression de deux points indépendants, la troisième position permettant l'impression des deux points simultanément au moyen de stylets mobiles dont la partie inférieure est aménagée afin de correspondre au profil supérieur des picots. Chaque ligne d'écriture est définie au moyen d'encoches aménagées ou rapportées sur les montants latéraux du cadre mobile, alors que de même la position du bâti de l'imprimante est définie par des encoches aménagées ou rapportées sur la règle mobile support, le déplacement et l'immobilisation à un endroit défini de la règle ou du bâti de l'imprimante sont obtenus par un verrou.

D'autres caractéristiques et avantages de l'invention ressortiront plus clairement de la description qui va suivre faite en regard des dessins joints donnés à tire d'exemple non limitatif, où :

- la figure 1 est une vue en perspective d'une tablette et du dispositif d'impression,

- la figure 2, une vue en coupe partielle de la tablette au niveau d'une cuvette,

- la figure 3, une vue en plan de la tablette faisant ressortir la mise en place d'un support pour l'impression recto et verso,

- la figure 4, une vue en perspective partielle d'un montant latéral du cadre de maintien du support,

- la figure 5, une vue de dessus de l'imprimante placée sur la traverse mobile,

- la figure 6, une vue de face de l'imprimante,

- la figure 7, une vue en coupe au niveau d'une touche,

- la figure 8, une vue en plan de la répartition des plateformes,

- la figure 9, le détail des stylets répartis sous les plateformes,

- la figure 10, une vue d'une traverse mobile permettant la mis place du support, tel que papier,

- la figure 11, une variante de réalisation d'une imprimante.

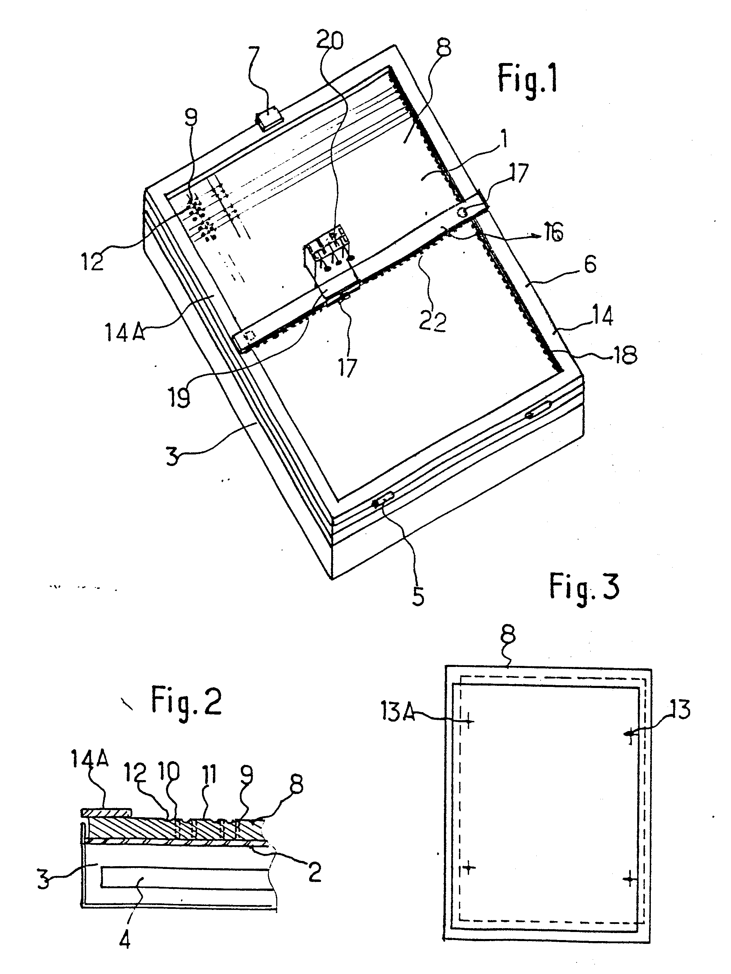

Tel que représenté figures 1 à 4, le dispositif d'impression des caractères Braille par points saillants sur un support tel que papier par exemple, comporte une tablette 1 dotée d'un plateau rigide 2 placé en partie supérieure d'un caisson 3 permettant d'insérer une réserve de supports impressionnés ou à impressionner au travers d'une ouverture 4 prévue à cet effet en une extrémité. Sur la face avant du caisson est fixée une charnière 5 du type à ressort raccordée à un cadre rigide 6 engendrant son articulation afin de permettre en position ouverte l'introduction du support à impressionner ou impressionné pour correction, à l'opposé de la charnière 5 un verrouillage 7 à bascule par exemple est prévu pour permettre lorsque le support est introduit son blocage en légère pression sur une épaisseur de matière souple 8 telle que mousse fixée sur le plateau 2. Sur le plateau 2 sont répartis et fixés des picots saillants 9 correspondant à la surface déterminée du support à impressionner, les picots 9 sont alignés horizontalement par groupes de trois lignes à écartement constant et par groupes de deux rangées verticales correspondant à la ligne d'écriture Braille, afin de permettre l'impression selon la disposition conventionnelle de chaque caractère. L'extrémité supérieure 10 des picots 9 est de forme arrondie, lesdits picots traversent l'épaisseur de matière souple 8 jusqu'à ce que l'extrémité 10 affleure la face supérieure 11 de ladite matière souple 8. Pour permettre l'impression du verso du support à impressionner lorsque le recto a été imprimé, des cuvettes 12 sont aménagées en nombre correspondant au maximum des six points de l'écriture conventionnelle, ces cuvettes 12 dans lesquelles se logent les points saillants impressionnés du recto, sont décalées des picots 9 de sorte à permettre l'impression du verso du support entre les impressions du recto, ce décalage est obtenu de manière connue en rapportant les perforations obtenues par un ou plusieurs pique-supports 13 disposés à droite par exemple à l'aplomb du montant latéral 14 du cadre 6 sur les pique-supports 13A de gauche décalés par rapport à ceux de droite.

Dans l'épaisseur de chaque montant latéral 14 et 14A du cadre 6, une rainure 15 est aménagée, elles permettent de maintenir une règle 16 support d'imprimante 20, la position de la règle 16 qui se déplace en coulissant sur les montants 14 et 14A est définie au moyen de crans 18 aménagés sur les mntonts 14 et 14A, chaque cran 18 correspond à l'emplacement d'une ligne d'écriture Braille, l'immobilisation de la règle 16 à la ligne choisie est obtenue par un ou deux verrous 17 du type à bille et ressort par exemple, s'insérant au fur et à mesure du déplacement dans les crans 18 correspondant, les lignes d'écriture étant repérées selon des signes conventionnels placés sur un des montants 14 ou 14A, ledit repérage pouvant être obtenu durant le déplacement de la règle 16 lorsque la ou les billes du ou des verrous 17 échappent des crans 18 pour aller se placer dans un autre cran consécutif, ce déplacement nécessitant un effort sensible au doigté. Dans l'épaisseur de la règle 16 et sur les faces latérales verticales est aménagée une rainure 21 recevant le curseur 19 du bâti d'imprimante 20, sur une des faces latérales verticales de la règle des crans 22 sont aménagés pour permettre de définir la position de chaque caractère d'écriture Braille et ce comme précédemment décrit au moyen d'un verrou 17 à bille et ressort

5

par exemple.

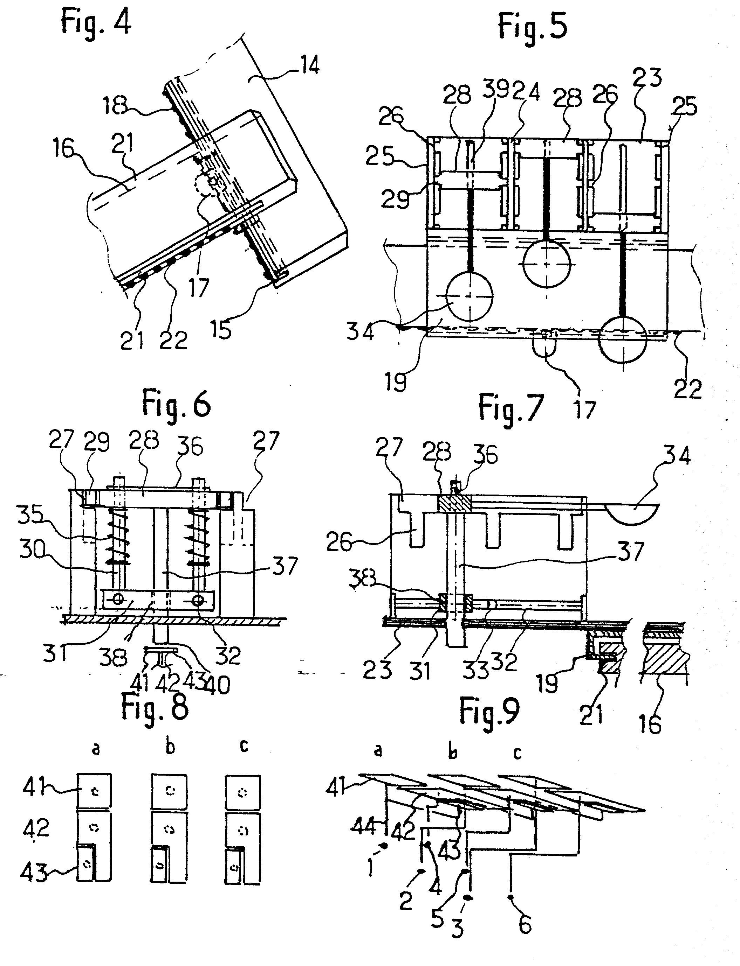

Tel que représenté figures 5, 6 et 7, l'imprimante 20 est constituée par un socle 23 prolongeant horizontalement le curseur 19 sur lequel sont maintenues les cloisons verticales 24 et 25, ces dernières sont pourvues chacunes de six rainures verticales 26 opposées pour les cloisons 24 et de trois rainures sur une seule face pour les cloisons 25, les rainures de chaque cloison étant alignées entre elles, et débouchent en partie supérieure desdites cloisons sur un décrochement 27 aménagé de part et d'autre des cloisons 24 et sur un seul côté pour les cloisons 25, ces décrochements sont destinés à recevoir et permettre le coulissement des traverses mobiles 28 reliées aux touches 34, lesdites rainures verticales 26 sont aménagées sur une certaine hauteur correspondant au déplacement vertical désiré des traverses 28 lorsque les languettes 29 aménagées à chacune de leurs extrémités sont placées face à deux rainures 26 se faisant face, et que lesdites traverses sont sollicitées durant l'enfoncement de la touche 34 correspondante.

Afin de maintenir les traverses mobiles 28 et permettre leur mise en place face aux saignées 26, chacune d'elles est enfilée sur deux montants 30 solidaires d'une assise mobile 31 coulissant sur deux rails 32 fixés sur le socle 23, sur chacun des rails 32 au moins un cran 33 est prévu pour repérer la position de chaque traverse 28 par rapport aux rainures centrales 26 au moyen par exemple d'une bille maintenue dans le socle 31 poussée par un ressort, les positions extrêmes étant obtenues par butée desdites traverses 28 en fond de décrochement 27, le déplacement horizontal de chaque traverse 28 est obtenu par sa touche 34 correspndante. De manière à permettre la remontée en position haute des traverses 28, des ressorts de rappel 35 sont enfilés sur les montants 30, lesdites traverses 28 sont maintenues sur les montants 30 par une traverse 36 par exemple reliant l'extrémité desdits montants 30.

Au centre de chaque traverse 28, un marteau 37 cylindrique ou de tout autre forme, est fixé, ils coulissent et traversent l'assise 31 au travers d'évidements 38 ainsi que le socle 23 au travers de débouchures de forme oblongue 39, les extrémités 40 des trois marteaux 37 sont destinées à appuyer chacune sur une série propre de plateformes 41, 42 et 43 (a, b et c),

6

les plateformes 41 et 42 (a, b et c) étant reliée chacune à un stylet 44 correspondant à un des six points de l'écriture Braille comme représenté figure 9, tandis que les plateformes 43 (a, b et c) sont reliées aux stylets 44 des plateformes 41 (a, b et c) .

Selon l'exemple représenté figure 9 la plateforme 41a permet l'impression du point 1, la 42a le point 4 et en position extrême du marteau 37 l'appui sur la plateforme 42a de forme appropriée et 43a permettant ainsi l'impression des deux points 1 et 4, de même pour les autres plateformes 41b : point 2, 42b : point 5, 42b et 43b : points 2 et 5, plateforme 41c : point 3, 42c : point 6, 42c et 43c : points 3 et 6.

Les plateformes 41, 42, 43 sont maintenues sur un support non représenté et sont pourvues d'un ressort de rappel.

La description qui précède est faite à titre d'exemple simple, il va de soi que des démultiplications dans les différents mouvements sont nécessaires notamment au niveau du déplacement des traverses 28 et marteaux 37 et ce par tous moyens connus appropriés, tels que bielle et levier par exemple, vérin, etc..

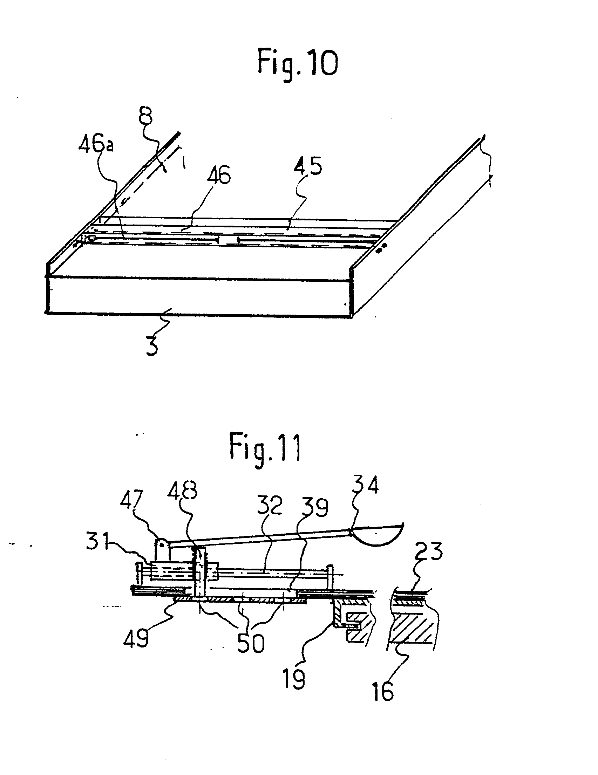

Afin de faciliter la mise en place du support tel que papier par exemple, une traverse mobile 45 représentée figure 10 est rapportée parallèlement à la règle 16, elle comporte une rainure 46 permettant de recevoir l'extrémité du support, elle est placée prés de l'opérateur, cette traverse 45 est solidaire des faces verticales du caisson 3 au moyen de verrous 46A permettant en outre son déplacement correspondant à l'écartement des piques-supports 13 et 13A.

Sans sortir du cadre de l'invention tel que représenté figure 11 et selon un mode de réalisation, une imprimante peut être réalisée sans les cloisons 24 et 25, seules les traverses 31 sont conservées, coulissant sur les rails 32 ou sur des rainures latérales non représentées, les touches 34 étant articulées en 47 sur lesdites traverses 31 en appui sur les marteaux 48, la position des plateformes 41, 42 et 43 (a,b,c) étant définie au moyen de trois perforations 50 permettant le passage des marteaux 48 aménagés sur une bande perforée 49, lesdites séries de trois perforations 50 étant réparties à l'aplomb de choque lettre et en face des débouchures oblongues 39, ladite bande perforée 49 étant fixée sur et/ou sous le socle 23, selon une variante les perforations 50 sont directement aménagées sur le socle 23.

Revendications

1°) Dispositif d'impression de caractères Braille par points saillants au moyen d'une imprimante (20) à touches sur un support maintenu sur une tablette (1) caractérisé en ce qu'il comporte un plateau rigide (2) sur lequel sont disposés des picots (9) alignés par groupes de trois lignes horizontales à écartement constant et par groupe de deux rangées verticales, les picots (9) traversant une épaisseur de matière souple (8) jusqu'à affleurer sa partie supérieure (11) où entre l'emplacement des picots (9) sont aménagées des cuvettes (12) décalées desdits emplacements permettant le logement des caractères imprimés du recto du support afin d'impressionner le verso dudit support maintenu sur la matière souple (8) par pincement au moyen d'un cadre rigide (6) articulé sur la tablette (1), les montants du cadre (14) et (14A) servant à maintenir une règle mobile (16) support d'imprimante (20) mobile elle aussi comportant trois touches (34) permettant chacune de déplacer un marteau (37) suivant trois positions correspondant chacune à l'emplacement de trois plateformes (41, 42 et 43) (a,b et c), celles correspondant à la position extrême (41) (a,b et c) et intermédiaires (42) (a,b et c) sont dotées d'un stylet (44) destiné à impressionner chacun un point distinct tandis que la troisième plateforme (43) (a,b et c) raccordée au stylet de la plateforme extrême (41) (a,b et c) permet l'impression simultanée de deux points.

2°) Dispositif d'impression de caractères Braille selon la revendication 1 caractérisé en ce que les lignes d'écriture sont définies au moyen de crans (18) aménagés sur les montants (14, 14A) du cadre rigide (6) recevant le verrou (17) de la règle (16), le repère des lignes étant obtenu soit au moyen de signes conventionnels placés sur un des montants (14 ou 14A) du cadre (6) ou lors du déplacement de la règle (16).

3°) Dispositif d'impression de caractères Braille selon la revendication 1 caractérisé par l'emplacement de l'imprimante (20) à l'aplomb de chaque caractère Braille défini par des crans (22) aménagés sur la règle (16), son immobilisation étant obtenue au moyen d'un verrou (17).

4°) Dispositif d'impression de caractères Braille selon la revendication 1 caractérisé par la plateforme intermédiaire (42) (a,b et c) de forme appropriée pour correspondre à l'emplacement du marteau (37) en position intermédiaire pour l'impression d'un point tandis qu'elle se prolonge pour correspondre à l'emplacement du marteau (37) en position extrême afin d'être sollicitée par ledit marteau (37) en même temps que la troisième plateforme (43) (a,b et c) afin de permettre l'impression de deux points simultanément.

5°) Dispositif d'impression de caractères Braille selon la revendication 1 caractérisé en ce que les stylets (44) prolongeant les plateformes (41 et 42) (a,b et c) sont de forme appropriée afin que chaque extrémité coïncide avec les picots (9) correspondant à l'un des six points d'un caractère d'écriture Braille.

6°) Dispositif d'impression de caractères Braille selon la revendication 1 caractérisé en ce que la position du marteau (37) de chaque touche (34) et le déplacement de ce dernier par enfoncement de la touche (34) correspondante sont obtenus grâce à des rainures verticales (26) aménagées sur des cloisons (24 et 25) dans lesquelles coulisse une traverse mobile (28) solidaire dudit marteau (37).

7°) Dispositif d'impression de caractères Braille selon la revendication 6 caractérisé en ce que chaque traverse mobile (28) est maintenue sur deux montants (30) sur lesquels elle coulisse, lesdits montants (30) étant solidaires d'une assise mobile (31) coulissant sur deux rails (32) solidaires du socle (23) de ladite imprimante (20).

8°) Dispositif d'impression de caractères Braille selon la revendication 7 caractérisé en ce que sur chaque rails (32) est aménagé un cran (33) pour repérer la position intermédiaire du marteau (37) et de ce fait des rainures (26) intermédiaires.

9°) Dispositif d'impression de caractères Braille selon la revendication 1 caractérisé en ce que le déplacement de la règle (16) de l'imprimante (20) et l'impression des caractères sont réalisés au moyen de trois doigts d'une seule main.

10°) Dispositif d'impression de caractères Braille selon la revendication 1 caractérisé en ce que l'imprimante est réalisée par des traverses 31 coulissant sur les rails (32) et/ou sur des rainures latérales sur chacune desquelles une touche (34) est articulée et est en appui sur un marteau (48) la position des plateformes (41, 42 et 43) (a,b et c) étant définie au moyen de trois perforations (50) permettant le passage des marteaux (48) à l'aplomb de chaque plateforme et aménagées sur une bande rapportée (49) en alignement des débouchures oblongues (39), les séries de trois perforations (50) étant réparties à l'aplomb de chaque lettre, ladite bande perforée étant fixée sur et/ou sous le socle (23), lesdites perforations (50) étant directement aménagées sur le socle 23.

11°) Dispositif d'impression de caractères Braille selon la revendication 1 caractérisé en ce qu'une traverse mobile (45) placée près de l'opérateur dotée d'une rainure (46) et solidaire des faces latérales verticales du caisson (3) permet de recevoir l'extrémité du support tel que papier facilitant lors de son déplacement correspondant à l'écartement des piques papiers (13 et 13A), la mise en place dudit support.

0105820

Fig.1

Fig.2

Fig.3

Fig. 4

Fig. 5

Fig. 6

Fig. 7

Fig. 8

Fig. 9

Fig.10

Fig.11